Europäisches Patentamt

European Patent Office

Office européen des brevets

(11) Numéro de publication: **0 125 953**
**B1**

---

(12) **FASCICULE DE BREVET EUROPEEN**

---

(45) Date de publication du fascicule du brevet:
09.03.88

(21) Numéro de dépôt: **84400731.0**

(22) Date de dépôt: **12.04.84**

(51) Int. Cl.⁴: **D 02 G 3/40**

---

(54) Procédé de fabrication d'une corde composite.

---

(30) Priorité: **14.04.83 FR 8306094**

(43) Date de publication de la demande:
**21.11.84 Bulletin 84/47**

(45) Mention de la délivrance du brevet:
**09.03.88 Bulletin 88/10**

(84) Etats contractants désignés:
**AT BE CH DE GB IT LI LU NL SE**

(56) Documents cités:
**FR - A - 1 128 721**
**GB - A - 900 769**
**US - A - 2 570 526**
**US - A - 2 770 940**
**US - A - 2 842 934**
**US - A - 4 355 069**

(73) Titulaire: **COUSIN FRERES S.A., 8 Rue Abbé Bonpain, F-59117 Wervicq-Sud (FR)**

(72) Inventeur: **Cousin, Jean-Claude, Route de Linselles, F-59117 Wervicq sud (FR)**
Inventeur: **Robin, Jacques, André, 125 Bld Malesherbes, F75017 Paris (FR)**

(74) Mandataire: **Viard, Jean, Cabinet VIARD 28 bis, avenue Mozart, F-75016 Paris (FR)**

---

## Description

La présente invention a pour objet un procédé de fabrication d'une corde composite destinée en particulier, mais non exclusivement à constituer le cordage d'une raquette de tennis. Elle vise également les cordes obtenues selon ce procédé.

Il est connu depuis longtemps de réaliser des cordes à partir de deux composants ou plus. Cette structure provient de ce qu'il n'est pas possible de trouver dans le commerce des fibres qui allient la résistance en traction désirée et la dureté nécessaire. Lors de la mise en tension, les fibres constituant la corde sont amenées au contact l'une de l'autre et il se produit une abrasion qui entraîne une usure rapide. Par ailleurs, les cordes doivent résister à différentes attaques physicochimiques dues à leur emploi dans des milieux divers. C'est pourquoi il a déjà été proposé d'inclure les fibres constituant la corde dans une gaine protectrice réalisée en un matériau plus dur que les fibres elles-mêmes qui isole ces dernières des attaques des agents atmosphériques. Cette action peut être renforcée par une lubrification interne.

Le Brevet US-A-4 095 404 décrit une autre solution à ce problème de protection des cordes ou câbles qui consiste à enrober les fibres d'aramides préalablement toronnées avec une résine polyuréthane qui forme une gaine pour chacun des torons, gaine qui élimine l'autodestruction par abrasion et qui protège ceux-ci contre le rayonnement ultraviolet. Après imprégnation par une solution appropriée les fibres sont séchées, retordues puis chauffées pour fondre au moins partiellement la résine.

Pour ce qui est plus spécialement des cordes de tennis, les conditions d'utilisation sont également très contraignantes. Elles doivent présenter des caractéristiques de retour élastiques qui sont, à priori incompatibles avec les tensions qui sont demandées par les joueurs. De plus, la pose sur tamis entraîne des pliures à 90° au moins, les différents brins portant les uns sur les autres accentuant ainsi la compression-abrasion.

Le brevet US-A-4 275 117 propose de réaliser une corde de tennis en utilisant des fibres dont les points de ramollissement sont suffisamment différents pour permettre la fusion de l'une des catégories de fibres alors que l'autre reste solide. La matière des premières fibres se répand après fusion dans les spires ou dans la tresse des secondes fibres après un chauffage contrôlé.

Le Brevet FR-A-2 491 098 au nom de la Demanderesse décrit une autre solution pour obtenir une corde de tennis composite qui consiste à enduire des multifilaments de polyamides par une solution de polyuréthane thermofusible, les multifilaments, imprégnés à cœur étant retordus après séchage puis chauffés de manière à ce que les fibres polyamides forment une armature entre les spires de laquelle se trouve un liant souple qui contribue à un retour rapide dans la position de repos après impact de la balle. Les cordes fabriquées selon ce procédé se sont révélées être d'une qualité en jeu égale ou supérieure à celle des meilleurs boyaux naturels avec une durabilité très supérieure.

Les procédés qui viennent d'être mentionnés sont toutefois des procédés relativement lents du fait de la nécessité d'une action thermique prolongée, qu'il s'agisse d'une évaporation des solvants suivie d'un chauffage ou d'une action unique de fusion. Il en résulte un coût de revient notable compte tenu, notamment de l'énergie thermique à mettre en œuvre. Dans tous ces procédés, il est nécessaire de chauffer l'ensemble de la corde. La présente invention a pour objet de remédier à cet inconvénient et de permettre une fabrication plus rapide et par suite un prix de revient moindre qu'avec les procédés connus.

Selon la présente invention, le procédé de fabrication d'une corde composite par retordage de fibres d'un premier matériau et d'un liant est caractérisé en ce que le liant est amené à l'état fondu entre les fibres lors de leur retordage. Ainsi, c'est le retordage qui produit la répartition du liant liquide entre les fils multifilaments constituant la corde et à l'extérieur de ceux-ci. Le retordage produit ainsi un essorage. Le liant se trouvant à l'extérieur est immédiatement calibré et lissé dans une filière appropriée.

Alors que dans les procédés connus il était nécessaire de prévoir un chauffage pour homogénéiser la corde, la structure de celle-ci est réalisée conformément à la présente invention en une seule opération. Il en résulte un gain de temps et d'énergie, la vitesse de fabrication étant multipliée par un coefficient de l'ordre de 60.

Selon une autre caractéristique de l'invention, une tête d'injection du liant est disposée au centre et à l'entrée de la filière de retordage.

Selon une autre caractéristique de l'invention, l'entrée de la filière de retordage formant cône constitue une cuvette dans laquelle est stockée une quantité constante de liant liquide.

D'autres caractéristiques et avantages de l'invention apparaîtront au cours de la description qui va suivre de modes de réalisation particuliers en regard des dessins qui représentent:

La Fig. 1, le schéma d'une installation permettant la fabrication de cordes selon l'invention;

La Fig. 2, un premier mode de réalisation pour l'introduction de liant liquide par une buse d'injection;

La Fig. 3, un autre mode de réalisation.

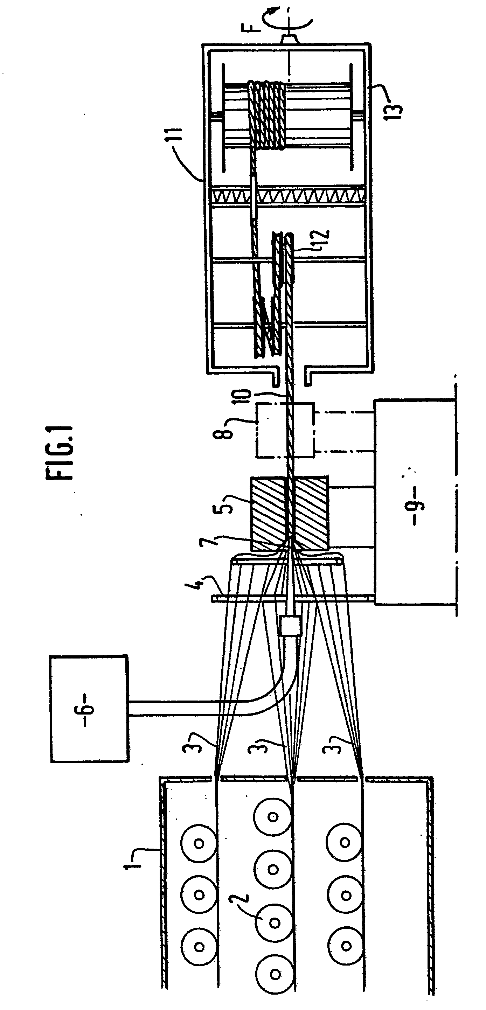

Sur la Fig. 1, l'appareillage comprend de la gauche vers la droite, un râtelier 1 portant un ensemble de bobines ou rolls 2 elles-mêmes chargées de fils multifilaments 3. Ces fils 3 dont le nombre peut varier par exemple de 6 à 12 passent à travers un répartiteur 4 de guidage qui les dirige vers une filière de guidage 5. Un ensemble d'extrusion 6 terminé par un injecteur 7 amène le liant liquide à l'intérieur et au centre de la filière 5. Le répartiteur 4 et la filière 5 sont solidaires d'un bâti 9 qui porte éventuellement une filière de régularisation 8 chauffante ou non représentée en traits interrompus sur la Fig. 1. La corde composite 10 obtenue par assemblage des fibres et du liant est dirigée à la sortie de la filière 8 sur une broche tournante 11 portant un ensemble de cabestans 12 destiné à assurer une tension régulière et une bobine réceptrice 13. La broche 11 tourne par exemple dans la direction indiquée par la flèche F et c'est elle qui produit le retordage des fils constituant la corde. La corde 10 est enroulée sur la bobine réceptrice 13 au fur et à mesure de sa fabrication.

Il est bien entendu possible d'utiliser tout autre moyen de retordage tel que par exemple un plateau tournant portant un nombre déterminé de bobines de fils.

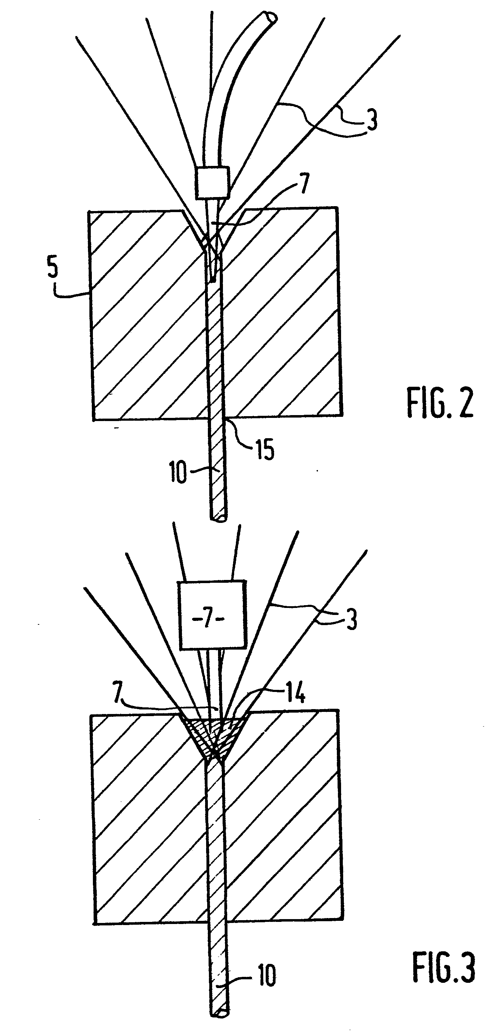

La Fig. 2 est une vue à échelle agrandie de la filière 5 dont la partie avant (dans le sens de défilement des fils) présente un orifice cônique permettant de guider les fils 3. Comme cela apparaît sur la Figure, la tête d'injection pénètre à l'intérieur de l'orifice 15 de la filière. Ainsi le liant fondu est amené très précisément au centre de la couronne qui est peu à peu constituée sous l'influence de la rotation de la broche 11 par les fils 3 avant que ceux-ci ne soient pressés les uns contre les autres. Lorsque ces fils avancent dans la filière, ils sont peu à peu compressés et cette compression permet d'une part le revêtement des fils à l'intérieur et d'autre part l'essorage de la partie excédentaire du liant qui se retrouve à l'extérieur de la corde où elle est régularisée par la filière 5 et éventuellement par la filière 8. Le liant peut être injecté avec une légère surpression. La formation de la corde est ainsi en quelque sorte naturelle le liant remplissant les espaces laissés vides par les fibres.

Une autre solution est représentée schématiquement sur la Fig. 3 dans laquelle le cône 14 est utilisé comme réservoir de liant liquide, le niveau de liant étant maintenu constant par un apport permanent de liant. Ainsi, les fils 3 traversent le cône 14 et s'imprègnent de liant liquide avant d'être retordus. La vitesse de défilement des fils qui est de l'ordre de plusieurs mètres par minute conduit à une sorte d'aspiration qui entraîne le liant vers le bas de la filière. Comme précédemment, le retordage produit un essorage du liant. Bien entendu, l'épaisseur de la corde obtenue dépend du diamètre des fils 3 et du diamètre de la filière 5. L'état de surface de la corde obtenue peut être amélioré, si nécessaire, par passage de la corde 10 dans une seconde filière 8 qui est éventuellement chauffée.

Le liant est introduit sous forme de poudre ou de granulés dans un dispositif 6 comprenant des moyens de chauffage thermostatés et des moyens pour assurer une légère surpression tels qu'une pompe à engrenages, le dispositif étant relié par une canalisation également thermostatée à l'injecteur 7. Bien entendu, le dispositif est réglé pour que la quantité de liant liquide introduit soit égale par unité de temps à la quantité de liant pénétrant à l'intérieur des torons de la corde et autour de ceux-ci. De préférence, la température de fusion du liant est inférieure à la température de fusion ou de ramollissement du matériau constituant les fils 3 par exemple de 50° de manière à ne pas altérer les multifilaments qui dans le cas du nylon commencent à fondre vers 190°C. On a toutefois constaté que le refroidissement du liant était très rapide de sorte que la température du liant liquide peut être, dans certains cas, supérieure à la température de fusion des fibres sans que l'on note de détérioration sensible de celles-ci.

Les fils 3 sont constitués, de préférence, par des multifilaments de polyamide du type «nylon» alors que le liant est un produit du type connu sous l'appellation «hot melt» consistant en des copolymères de polyamide, de polyuréthane, d'éthylène-acide acrylique, de chlorure ou de fluorure de vinylidène les copolymères étant choisis d'une part en fonction de leur allongement à la rupture pour respecter les contraintes propres aux cordes de tennis et, d'autre part, en considérant leur viscosité à chaud qui doit être suffisante pour permettre une bonne imprégnation des fils 3. Une viscosité de l'ordre de 20 poises est considérée comme satisfaisante pour permettre d'une part l'enrobage des fibres et une répartition homogène du liant entre celles-ci. Les filières 5 et 8 assurent une parfaite homogénéité de la corde ainsi constituée en forçant le liant dans les espaces intertorons.

## Revendications

1. Procédé de fabrication d'une corde composite par retordage de fils d'un premier matériau, caractérisé en ce qu'un liant est injecté entre les fils lors de leur retordage, à l'état liquide.

2. Procédé selon la revendication 1, caractérisé en ce que les fils (3) passent à travers une filière de retordage (5), un injecteur (7) de liant pénétrant à l'intérieur de la filière (5).

3. Procédé selon la revendication 1, caractérisé en ce que l'entrée de la filière (5) étant conformée en entonnoir (14), une réserve de liant fondu est constituée à l'intérieur dudit entonnoir (14).

4. Procédé selon l'une quelconque des revendications précédentes, caractérisé en ce que les fils (3) sont des multifilaments de fibres synthétiques.

5. Procédé selon l'une quelconque des revendications précédentes, caractérisé en ce que le liant est choisi dans la classe des copolymères de polyamides, de polyuréthanes, d'éthylène-acide acrylique, d'halogénures de vinylidène.

## Claims

1. Method for producing a composite string by twisting the strands of a first material, characerised in that a binder is injected in the liquid state between the strands when they are twisted.

2. Method according to claim 1, characterised in that the strands (3) pass through a twisting die (5), a binder injector (7) penetrating into the die (5).

3. Method according to claim 1, characterised in that, as the inlet of the die (5) is shaped like a funnel (14), a molten binder reserve is formed inside the said funnel (14).

4. Method according to any one of the preceding claims, characterised in that the strands (3) are synthetic fibre multifilaments.

5. Method according to any one of the preceding claims, characterised in that the binder is selected from the class of polyamide, polyurethane, ethylene/acrylic acid and halogenated vinylidene copolymers.

**Patentansprüche**

1. Verfahren zur Herstellung einer zusammengesetzten Leine durch Verzwirnen von Fäden aus einem ersten Material, dadurch gekennzeichnet, dass während dem Verzwirnen ein Bindemittel in flüssigem Zustand zwischen die Fäden eingespritzt wird.

2. Verfahren nach Anspruch 1, dadurch gekennzeichnet, dass die Fäden (3) durch eine Verzwirnungsdüse (5) laufen, in deren Innenraum eine Einspritzvorrichtung (7) für das Bindemittel hineinragt.

3. Verfahren nach Anspruch 1, dadurch gekennzeichnet, dass der Eingang der Verzwirnungsdüse (5) in der Form eines Trichters (14) ausgebildet ist, wobei im Innenraum des Trichters (14) ein Vorrat an geschmolzenem Bindemittel vorgesehen ist.

4. Verfahren nach einem der Ansprüche 1 bis 3, dadurch gekennzeichnet, dass die Fäden (3) mehrfaserige Fäden aus synthetischen Fasern sind.

5. Verfahren nach einem der Ansprüche 1 bis 4, dadurch gekennzeichnet, dass das Bindemittel aus der Klasse der Kopolymeren von Polyamiden, Polyurethanen, Akryl-Äthylensäure und Vinyliden-Halogensalzen gewählt wird

FIG.1

0 125 953

FIG. 2

FIG.3